# EUROPÄISCHE PATENTANMELDUNG

(11) **EP 2 626 532 A1**
(43) Veröffentlichungstag der Anmeldung: **14.08.2013**
(21) Anmeldenummer: 12154233.6
(22) Anmeldetag: 07.02.2012
(51) Int. Cl.: F02C 3/22, F02C 6/18

(54) **Verfahren zum Betreiben einer Gasturbine**

(71) Anmelder: Siemens Aktiengesellschaft, 80333 München (DE)
(72) Erfinder: Eisfeld, Tjark, 45478 Mülheim a. d. Ruhr (DE); Engler, Thorsten, 47447 Moers (DE); Gindorf, Christian, 47829 Krefeld (DE); Heilos, Andreas, 45479 Mülheim an der Ruhr (DE); Hu, Marie, 45478 Mülheim an der Ruhr (DE); Kaufmann, Carsten, 45478 Mülheim a.d. Ruhr (DE); Somoza Parada, Irene, 41464 Neuss (DE); Wilkes, Jan, 40239 Düsseldorf (DE)

(57) **Zusammenfassung**

Ein Verfahren zum Betreiben einer Gasturbine (2) soll eine weitere Erhöhung der betrieblichen Flexibilität insbesondere im Teillastbereich bei gleichzeitig geringen CO-Emissionen erlauben. Dazu wird der Gasturbine (2) zugeführtes Brenngas (B) vor der Zufuhr zur Gasturbine (2) mit Zusatz von Wasser-dampf partiell reformiert.

## Beschreibung

Die Erfindung betrifft ein Verfahren zum Betreiben einer Gasturbine.

Eine Gasturbine ist eine Verbrennungskraftmaschine, bestehend aus der Gasturbine im engeren Sinne (Expander) mit einem vorgeschalteten Verdichter und einer dazwischengeschalteten Brennkammer, der ein Brenngas, typischerweise Erdgas zugeführt wird. Das Wirkungsprinzip beruht auf dem Joule-Prozess, bei dem über die Beschaufelung einer oder mehrerer Verdichterstufen Luft komprimiert wird, diese anschließend in der Brennkammer mit einem Brenngas gemischt wird, gezündet wird und verbrennt. So entsteht ein Heißgas (Mischung aus Brenngas und Luft), das im nachfolgenden Turbinenteil entspannt, wobei sich thermische in mechanische Energie umwandelt und zunächst den Verdichter antreibt. Der verbleibende Anteil wird üblicherweise zum Antrieb eines Generators, eines Propellers, eines Rotors, eines Kompressors oder einer Pumpe verwendet. Bei Strahltriebwerken dagegen beschleunigt die thermische Energie den heißen Gasstrom, was den Schub erzeugt.

Stationäre Gasturbinen kommen häufig in Gas- und Dampfturbinen-(GUD-)Kraftwerken zum Einsatz. Im GUD-Kraftwerk wird mit ein bis vier Gasturbinen und einer Dampfturbine Elektrizität erzeugt, wobei entweder jede Turbine jeweils einen Generator antreibt (Mehrwellenanlage) oder eine Gasturbine mit der Dampfturbine (abkuppelbar) auf einer gemeinsamen Welle den Generator (Einwellenanlage). Die heißen Abgase der Gasturbinen werden in einem Abhitze-Dampfkessel zur Erzeugung von Wasserdampf verwendet. Der Dampf wird anschließend über einen Dampfturbinenprozess entspannt.

GUD-Kraftwerke sind im Kraftwerksmanagement sehr flexibel einsetzbar: Dank kurzer Startzeiten und der Möglichkeit schneller Laständerungen sind sie ideale Mittellast-Kraftwerke. Vorrangig werden diese Kraftwerke daher im Mittellastbereich, bei Bedarf jedoch auch im Bereich des Spitzenstroms betrieben.

Gerade im Teillastbetrieb neigen Gasturbinen jedoch prinzipbedingt zu erhöhten CO-Emissionen. Die Ursache ist im Wesentlichen eine Reduktion der Turbineneintrittstemperatur, mit der die gewünschte Teillast eingestellt wird. Der Ausbrand und damit die CO-Emissionen stehen in unmittelbarem Zusammenhang mit dieser Temperaturabsenkung. Dementsprechend wird zur Verringerung der CO-Emissionen häufig gezielt auf thermodynamische Parameter abgestellt. So kann z. B. der Brennereintrittsluftmassenstrom reduziert werden (durch Abblasen von Verdichterluft vor der Brennkammer oder Reduzierung des angesaugten Luftmassenstroms durch Schließen der Verdichterleitschaufeln), die Turbineneintrittstemperatur durch Anheben der Abgastemperatur erhöht werden oder die Verdichtereintrittstemperatur verbunden mit einer Reduktion des Ansaugmassenstroms erhöht werden.

Je nach gesetzlichen Rahmenbedingungen wird der kontinuierliche Betrieb der Gasturbine dennoch zu niedrigen Lasten hin limitiert. Unterhalb dieser Mindestlasten bleibt dem Kraftwerksbetreiber nur das Abfahren der Anlage. Das Wiederanfahren bei ausreichender Stromnachfrage ist zwar schnell möglich, kostet im Allgemeinen jedoch Lebensdauer der thermisch belasteten Komponenten.

Es ist daher Aufgabe der Erfindung, ein Verfahren zum Betreiben einer Gasturbine anzugeben, das eine weitere Erhöhung der betrieblichen Flexibilität insbesondere im Teillastbereich bei gleichzeitig geringen CO-Emissionen erlaubt.

Diese Aufgabe wird erfindungsgemäß gelöst, indem der Gasturbine zugeführtes Brenngas vor der Zufuhr zur Gasturbine mit Zusatz von Wasserdampf partiell reformiert wird.

Die Erfindung geht dabei von der Überlegung aus, dass eine Erhöhung der betrieblichen Flexibilität und geringe CO-Emissionen im Teillastbereich durch eine Verbesserung des Ausbrands des Brenngases erreicht werden könnten. Der Ausbrand wird dabei durch konstruktions- und verfahrensbedingte Größen beeinflusst. Im Wesentlichen sind dies Durchmischung, Quench-Effekte bei Mischung mit Kühlluftströmen, die zur Verfügung stehende Verweilzeit im Brennraum sowie die Brennstoffeigenschaften. Neben den bereits bekannten thermodynamischen Maßnahmen könnte daher eine konstruktive Vergrößerung der Verweilzeit z. B. durch Vergrößerung der Baulänge der Brennkammer den CO-Gehalt reduzieren. Diese wirkt sich jedoch negativ auf die NOx-Emissionen bei hohen Brennraumtemperaturen aus, so dass diese Option ausscheidet.

Daher sollte eine Modifikation der Brennstoffeigenschaften erfolgen, d. h. zur Verringerung der CO-Emissionen sollte bedarfsweise die Brennstoffzusammensetzung geändert werden. Dies ist besonders einfach möglich, in dem das Brenngas unter Zusetzung von Wasserdampf partiell reformiert wird. Das entstehende Gemisch aus Kohlenmonoxid, Wasserstoff, Erdgas und Wasser weist eine erhöhte Reaktivität auf, wodurch der Ausbrand des in der Flammenfront gebildeten Kohlenmonoxids beschleunigt wird.

In vorteilhafter Ausgestaltung erfolgt das Reformieren in einem Rohrreaktor, dem Brenngas zugeführt wird, dem zuvor Wasserdampf zugesetzt wird. Der Rohrreaktor eignet sich besonders gut, die für die Reformierung erforderlichen Temperatur- und Druckparameter bereitzustellen. Die Reformierung kann sowohl mit als auch ohne Katalysator betrieben werden.

In weiterer vorteilhafter Ausgestaltung wird der Rohrreaktor mittels der Abgase der Gasturbine beheizt. Dabei kann die Beheizung des Rohrreaktors entweder direkt mit Gasturbinenabgas geschehen oder der Rohrreaktor befindet sich an geeigneter Stelle in einem der Gasturbine nachgeschalteten Abhitzedampferzeuger. Dies ist besonders wirkungsgradeffizient, da keine zusätzliche Heizeinrichtung nötig ist. Die Abgase stellen eine Temperatur von ca. 400 bis 650 °C zur Verfügung. Diese Temperaturen reichen zwar unter Umständen nicht für eine vollständige Reformierung des Brenngases aus. Eine vollständige Umsetzung ist jedoch für den Anwendungsfall in einer Gasturbine nicht erforderlich und auch nicht erwünscht. Vielmehr genügt eine Anreicherung mit Wasserstoff, so dass die Reaktivität erhöht wird, auf der anderen Seite aber auch keine Gefährdung des Betriebs durch Flammenrückschlag entsteht.

Vorteilhafterweise wird das Brenngas vor der Zufuhr zur Gasturbine und nach dem Reformieren in einen Wärmetauscher geleitet. Dadurch kann der Wärmeinhalt des reformierten Brenngases wirkungsgradsteigernd genutzt werden, beispielsweise zur Dampferzeugung oder zur Vorwärmung des Brenngases.

Vorteilhafterweise erfolgt weiterhin der Zusatz von Wasser-dampf mittels einer Strahlpumpe, wobei der Wasserdampf als Treibmedium und das Brenngas als Saugmedium verwendet wird. Dadurch kann insbesondere in vergleichsweise höheren Lastbereichen, in denen der Druck des Brenngases nicht mehr ausreicht, um die Druckverluste in Mischer und Rohrreaktor auszugleichen, ein ausreichender Druck für das reformierte Brenngas erzeugt werden.

Dabei wird vorteilhafterweise der Wasserdampf einem der Gasturbine zugeordneten Abhitzedampferzeuger entnommen. Dieser Wasserdampf hat typischerweise einen vergleichsweise hohen Druck, der zur Druckerhöhung des reformierten Brenngases und/oder der Nutzung in einer Strahlpumpe vorteilhaft genutzt werden kann.

Vorteilhafterweise wird die Gasturbine dabei unterhalb von 70% ihrer Maximalleistung betrieben. Gerade in derartigen, vergleichsweise niedrigen Lastbereichen ist es möglich, durch die Reformierung der Brenngase die Gasturbine noch emissionskonform zu betreiben.

Vorteilhafterweise wird eine Gasturbine mit dem beschriebenen Verfahren betrieben und eine Kraftwerksanlage umfasst eine derartige Gasturbine.

Die Kraftwerksanlage ist dabei vorteilhafterweise als Gas- und Dampfturbinenkraftwerk ausgelegt. Dadurch lassen sich bezüglich des beschriebenen Verfahrens vielfache Synergieeffekte erzielen. So kann z. B. der Wasserdampf aus dem Dampfkreislauf genutzt werden.

Die mit der Erfindung erzielten Vorteile bestehen insbesondere darin, dass durch die partielle Reformierung des Brenngases mit Zufuhr von Wasserdampf auch bei niedrigen Lasten einer Gasturbine, d. h. bei verminderten Flammenendtemperaturen und den typischen in Gasturbinenbrennkammern zur Verfügung stehenden Verweilzeiten Kohlenmonoxid bis unter die geforderten Grenzwerte abreagiert. Dadurch kann die Gasturbine auch bei niedrigen Lasten weiter betrieben werden und es ist kein lebensdauerreduzierender Ab- und Anfahrvorgang nötig. Die Prozessführung mit den Parametern Verweilzeit und Dampf- /Erdgas-Verhältnis ist dabei so zu bemessen, dass ein sicherer Betrieb ohne Flammenrückschlag mit den für Erdgasbetrieb ausgelegten Brennern möglich ist.

Das reformierte Brenngas kann dabei entweder in den Hauptgasstrom, den Vormischgasstrom, in den Pilotgasstrom oder gezielt in einzelne Verbrennungsstufen gemischt werden. Durch die Beschränkung auf einzelne Verbrennungsstufen erhält man bereits mit geringen Massenströmen einen deutlichen Einfluss auf die Emissionsdaten.

Insgesamt ist es mit dem beschriebenen Verfahren möglich, gezielt die reaktiven Eigenschaften des Brennstoffes zu beeinflussen und den Anforderungen an Emissionsdaten und Verbrennungsstabilität im Teillastbereich anzupassen. Dadurch ist es möglich, Gasturbinen emissionskonform auch bei niedrigen Lasten zu betreiben.

Die Erfindung wird anhand einer Zeichnung näher erläutert. Darin zeigen:
FIG 1 eine schematische Darstellung eines Gas- und Dampfturbinenkraftwerks mit einer Gasturbine mit Brenngasreformierung mit Mischeinheit zur Vermischung von Wasserdampf und Brenngas, und
FIG 2 eine schematische eine schematische Darstellung eines Gas- und Dampfturbinenkraftwerks mit einer Gasturbine mit Brenngasreformierung mit Strahlpumpe zur Vermischung von Wasserdampf und Brenngas.

Gleiche Teile sind in allen FIGs mit denselben Bezugszeichen versehen.

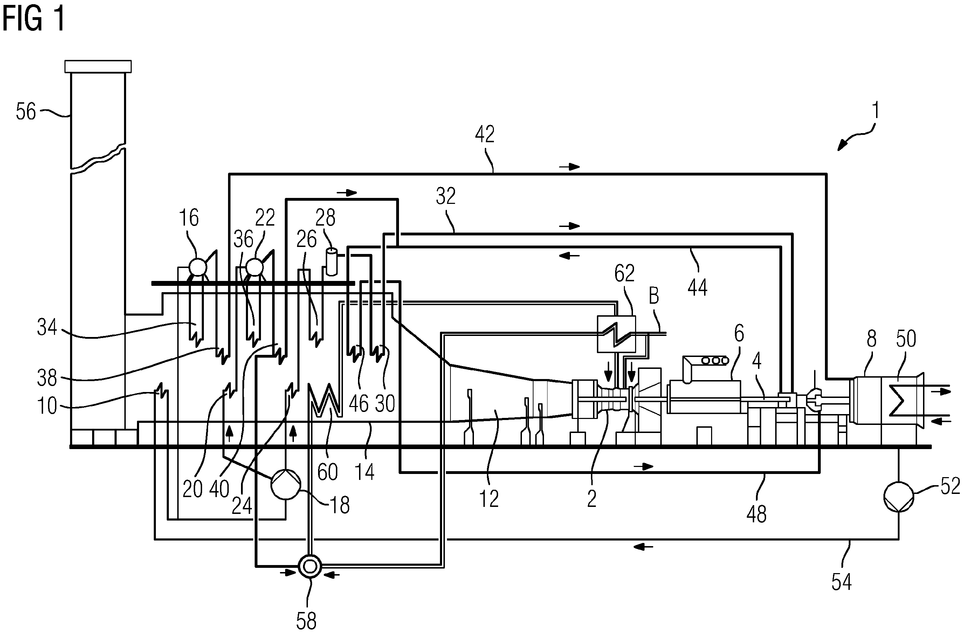

Das Gas- und Dampfturbinenkraftwerk 1 gemäß der FIG 1 umfasst eine Gasturbine 2 und den mit der Gasturbine 2 auf einer gemeinsamen Welle 4 angeordneten Generator 6. Das Gas- und Dampfturbinenkraftwerk 1 ist als Einwellenanlage ausgelegt. Auf der Welle 6 ist somit auch eine Dampfturbine 8 angeordnet. Die Dampfturbine 8 ist für eine einfache Zwischenüberhitzung ausgelegt, umfasst also drei Turbinenstufen, nämlich jeweils eine Hoch-, Mittel- und Niederdruckstufe.

Der Dampfkreislauf beginnt mit der Vorwärmung des Speisewassers im Vorwärmer 10, der ebenso wie sämtliche im Folgenden beschriebenen Vorwärmer, Verdampfer und Überhitzer in einem dem Abgaskanal 12 der Gasturbine 2 nachgeschalteten Abhitzedampferzeuger 14 angeordnet sind. Das vorgewärmte Speisewasser wird von dort auf die Niederdruckdampftrommel 16 und die Speisewasserpumpe 18 verteilt. Aus der Speisewasserpumpe 18 wird das Speisewasser wiederum über den Mitteldruckvorwärmer 20 in die Mitteldruckdampftrommel 22 sowie parallel dazu in den Hochdruckvorwärmer 24 geleitet.

Der Hochdruckteil des Abhitzedampferzeugers 14 ist im Durchlauf ausgelegt, d. h. es existiert keine Dampftrommel. Vielmehr wird das Medium aus dem Hochdruckvorwärmer 24 direkt in den kombinierten Hochdruckverdampfer- und -überhitzer 26 geleitet. Von dort aus strömt es in eine Wasser-Dampf-Abscheideeinrichtung 28, die im Wesentlichen nur bei geringen Lasten für eine Abscheidung von verbleibendem flüssigem Medium sorgt. Der Dampf aus der Wasser-Dampf-Abscheideeinrichtung 28 wird im Hochdrucküberhitzer 30 nochmals überhitzt und anschließend über die Hochdruckdampfleitung 32 der Hochdruckstufe der Dampfturbine 8 zugeführt.

Die Mittel- und Niederdruckstufen des Abhitzedampferzeugers 14 sind im Umlauf ausgelegt. Von der Niederdruckdampftrommel 16 ausgehend wird im Umlauf, d. h. zirkulierend der Niederdruckverdampfer 34 durchströmt, analog von der Mitteldruckdampftrommel 22 ausgehend der Mitteldruckverdampfer 36. Der jeweils in den Dampftrommeln 16, 22 anfallende Dampf wird in den Niederdrucküberhitzer 38 bzw. den Mitteldrucküberhitzer 40 geleitet. Mit dem Dampf aus dem Niederdrucküberhitzer 38 wird über die Niederdruckdampfleitung 42 der Niederdruckstufe der Dampfturbine 8 zugeführt.

Der Dampf aus dem Mitteldrucküberhitzer 42 hingegen wird mit dem in der Hochdruckstufe der Dampfturbine 8 entspannten und über die Rückführleitung 44 zurückgeführten Dampf vermischt und in den Zwischenüberhitzer 46 geführt. Von hier wird der Dampf über die Mitteldruckdampfleitung 48 der Mitteldruckstufe der Dampfturbine 8 zugeführt. In der Dampfturbine 8 im Übrigen anfallender Dampf wird in den Kondensator 50 geleitet, wo er verflüssigt wird und über eine Kondensatpumpe 52 und die Speisewasserleitung 54 wieder der Speisewasserpumpe 18 zugeführt wird.

Die Gasturbine 2 wird mit Erdgas als Brenngas B beaufschlagt. Das nach in der Gasturbine 2 entstehende Abgas wird nach der Passage des Abhitzedampferzeugers 14 in einen Kamin 56 geleitet und von dort in die Umwelt. Dementsprechend sind hier Grenzwerte bezüglich des CO-Gehalts des Abgases einzuhalten. Um dies auch bei niedrigen Lasten zu gewährleisten, wird das Brenngas B oder wahlweise ein Teil des Brenngases B einer Mischeinheit 58 zugeführt, in der es mit im Bereich des Mitteldrucküberhitzers 40 entnommenem Dampf vermischt wird. Das Wasserdampf-Brenngas-Gemisch wird anschließend einem im Abhitzedampferzeuger 14 angeordneten Rohrreaktor 60 zugeführt.

Im Rohrreaktor 60 wird das Gas durch den dort herrschenden Druck und die dort herrschende Temperatur partiell reformiert. Das partiell reformierte Brenngas wird anschließend über einen Wärmetauscher 62, in dem das zuvor der Mischeinheit 58 zugeführte Brenngas B vorgewärmt wird, in die Brenner der Gasturbine 2 geleitet. In einer alternativen, nicht gezeigten Ausführungsform ist der Wärmetauscher 62 in die Speisewasserleitung 54 geschaltet.

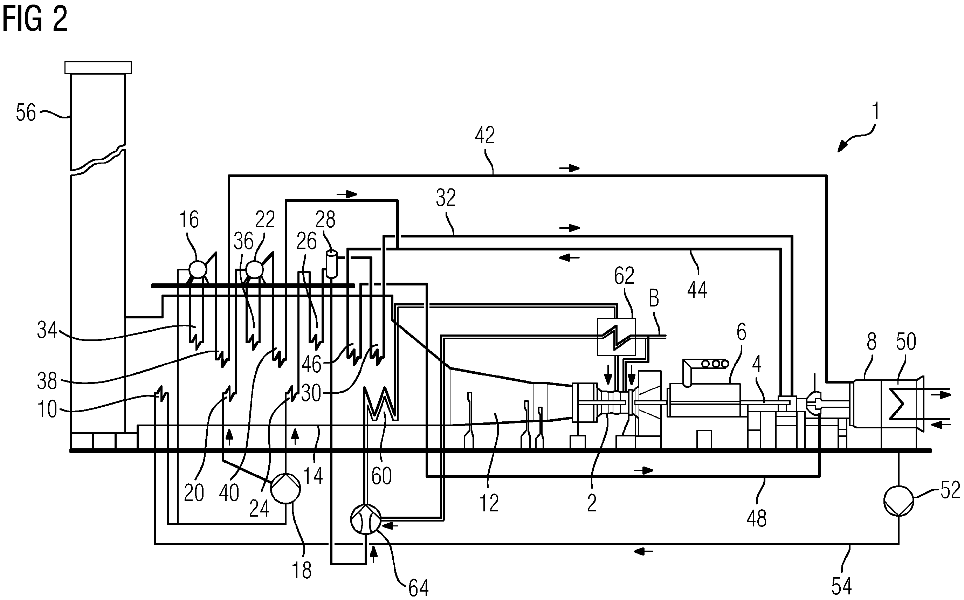

Die Ausführungsform nach FIG 2 wird nur anhand ihrer Unterschiede zur FIG 1 beschrieben. Die Mischeinheit 58 ist hier durch eine Strahlpumpe 64 ersetzt. Der Dampf wird der Wasser-Dampf-Abscheideeinrichtung 28 der Hochdruckstufe des Abhitzedampferzeugers 14 entnommen und wirkt in der Strahlpumpe als Treibmedium. Dadurch wird der Druck des reformierten Gases erhöht und die Ausführungsform nach FIG 2 eignet sich auch für höhere Lasten der Gasturbine 2.

## Patentansprüche

1. Verfahren zum Betreiben einer Gasturbine (2),
bei dem der Gasturbine (2) zugeführtes Brenngas (B) vor der Zufuhr zur Gasturbine (2) mit Zusatz von Wasserdampf partiell reformiert wird.

2. Verfahren nach Anspruch 1,
bei dem das Reformieren in einem Rohrreaktor (60) erfolgt, dem Brenngas (B) zugeführt wird, dem zuvor Wasserdampf zugesetzt wird.

3. Verfahren nach Anspruch 2,
bei dem der Rohrreaktor (60) mittels der Abgase der Gasturbine (2) beheizt wird.

4. Verfahren nach einem der vorhergehenden Ansprüche,
bei dem das Brenngas (B) vor der Zufuhr zur Gasturbine (2) und nach dem Reformieren in einen Wärmetauscher (62) geleitet wird.

5. Verfahren nach einem der vorhergehenden Ansprüche,
bei dem der Zusatz von Wasserdampf mittels einer Strahlpumpe (64) erfolgt, wobei der Wasserdampf als Treibmedium und das Brenngas (B) als Saugmedium verwendet wird.

6. Verfahren nach Anspruch 5,
bei dem der Wasserdampf einem der Gasturbine (2) zugeordneten Abhitzedampferzeuger (14) entnommen wird.

7. Verfahren nach einem der vorhergehenden Ansprüche,
bei dem die Gasturbine (2) unterhalb von 70% ihrer Maximalleistung betrieben wird.

8. Gasturbine (2),
betrieben mit dem Verfahren nach einem der vorhergehenden Ansprüche.

9. Kraftwerksanlage (1) mit einer Gasturbine (2) nach Anspruch 8.

10. Kraftwerksanlage (1) nach Anspruch 9,
die als Gas- und Dampfturbinenkraftwerk (1) ausgelegt ist.
